# EUROPEAN PATENT SPECIFICATION

(11) **EP 0 555 817 B1**
(45) Date of publication and mention of the grant of the patent: **19.04.1995**
(21) Application number: 93102014.3
(22) Date of filing: 09.02.1993
(51) Int. Cl.: F16D 65/10, B22D 19/02

(54) **Brake drum for a motor vehicle and method for making the same**
Bremstrommel für ein Kraftfahrzeug und Verfahren zu deren Herstellung
Tambour de frein pour véhicule à moteur et méthode pour sa fabrication

(30) Priority: 12.02.1992 US 834586
(43) Date of publication of application: 18.08.1993
(73) Proprietor: THE BUDD COMPANY, Troy, MI 48084 (US)
(72) Inventor: Deane, Alastair Russell, Novi, Michigan 48375 (US)
(74) Representative: Finck, Dieter, Dr.Ing.

(56) References cited:
- EP-A- 0 490 021
- US-A- 2 003 063
- US-A- 3 323 620
- US-A- 4 858 731

## Description

The invention relates to a brake drum for a motor vehicle comprising a center disk portion for mounting said drum to said motor vehicle, and a cylindrical side portion joining said center disk portion to define an inside cylindrical braking surface and a closed end and an open end surrounded by a rim, as well as a method for making such a brake drum.

Motor vehicle brake drums are typically produced by a casting process in which cast iron is poured into green-sand casting molds. By its very nature, such casting processes have limitations in terms of dimensional tolerances and surface finishes which can be achieved in the as-cast part. It is, therefore, generally necessary to machine the brake drum after casting to generate the inside cylindrical braking surface and to form the mounting surfaces of the center section of the brake drum. As a means of reducing outside contaminants from entering the brake drum in use, brake drums typically have a labyrinth groove encircling the open rim of the drum. A sheet metal backing plate mounted to the vehicle axle typically includes an up-standing flange which is positioned within the labyrinth groove when the brake drum is mounted to the vehicle. Due to the various dimensional stack-ups and part distortion during use, the labyrinth groove of the brake drum must be accurately formed. In some applications, it is possible to form the labyrinth groove with sufficient accuracy during brake drum casting. However, in some applications, and especially small passenger car brake drums, the labyrinth groove must be formed by machining the casting to provide the requisite degree of accuracy. The requirement of machining the groove results in a significant waste in terms of the material which must be removed from the groove. The machining operation is also demanding in terms of process time and tool life.

According to US-A-4 858 731 a formed wire reinforcing structure is embedded within the brake drum structure for the purpose of improving mechanical characteristics, and in particular, the fatigue life of the drum.

The prior art will be further explained with the aid of drawings, in which
- Fig. 1: is a pictorial view of a typical prior art brake drum and
- Fig. 2: is a partial cross sectional view of the prior art brake drum shown in Fig. 1.

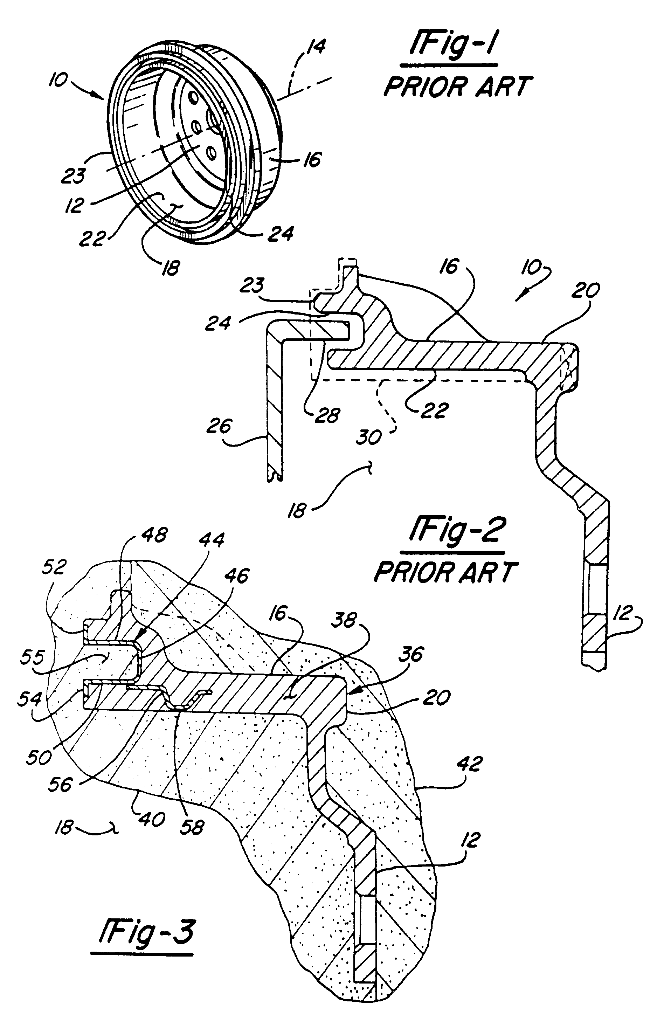

A prior art brake drum 10 as shown in Fig. 1 and 2 has a mounting disk portion 12 configurated to enable the drum to be mounted to a motor vehicle axle hub (not shown) for rotation about an axis of rotation 14. The mounting disk portion 12 merges into a cylindrical side portion 16 thus forming an open end 18 and a closed end 20. The inside cylindrical friction surface 22 of the drum is engaged by expanding brake shoes of a conventional drum type braking system.

In Fig. 2, conventional brake drum 10 is shown in section with rim 23 surrounding the drum open end 18 having labyrinth groove 24. When drum 10 is mounted to the associated vehicle, brake backing plate 26 is positioned such that its up-standing flange 28 is positioned within labyrinth groove 24. Since brake drum 10 rotates whereas backing plate 26 is stationary it is important to prevent direct contact between these two components. For that reason, labyrinth groove 24 must be formed with precision.

Fig. 2 shows the configuration of a conventional brake drum both in its "as-cast" condition, and after finish machining. The as-cast configuration is designated by the outline of phantom line 30. In finish machining, it is necessary to machine away the material between phantom line 30 and the surface shown in full lines of the finished drum. It is significant to note that a large volume of material must be removed in the area defining labyrinth groove 24. Although it might seem appropriate to design the casting mold to create a core area in the region of the groove to reduce machining requirements, it has been found that more precise machining is possible when cutting into a solid block of material.

It is the object of the invention to provide a brake drum of the generic kind the labyrinth seal groove of which can be accurately formed in a simplified manner.

This object can be achieved with a brake drum of the generic kind, in which an annular insert having a radial wall and first and second cylindrical walls joining said radial wall, said annular insert embedded within said cylindrical side portion to form the bottom and side surfaces of a labyrinth groove within said rim.

Advantageously said annular insert is formed from sheet metal.

Preferably said brake drum center and cylindrical side portions are formed from cast iron.

Conveniently said annular insert further comprises locating means for positioning said annular insert relative to said cylindrical side portion during forming of said brake drum.

Said locating means may comprise at least two legs affixed to said annular insert.

Usually said labyrinth groove opens in a lateral direction relative to the axis of rotation of said brake drum.

Preferably said annular insert has a radial wall and first and second cylindrical walls joining said radial wall, said walls having a generally constant thickness and being formed from a deformable sheet stock material.

Said annular insert may be formed from sheet steel.

It is advantageous that the annular insert further defines a flange extending from at least one of said cylindrical walls.

Said annular insert may define a pair of flanges with one of said flanges extending from each of said cylindrical walls.

A preferred method for making said brake drum according to the invention comprises the steps of providing casting mold halves defining a mold cavity, providing said annular insert, placing said annular insert into said mold cavity in a position such that said annular insert walls define the bottom and side surfaces of said labyrinth groove opening laterally relative to said drum, pouring molten iron into said mold cavity thereby embedding said annular insert, and removing said brake drum from said mold cavity.

The method may comprise a further step of machining said brake drum after said removing step thereby machining away portions of said annular insert.

In the brake drum according to this invention a metal ring is cast in place within the drum structure during production to reduce machining requirements after casting.

The motor vehicle brake drum is a composite structure which includes an annular insert which is insert-cast into the brake drum. The annular insert is preferably made from stamped sheet steel and forms three walls of the labyrinth groove and is positioned within the casting mold such that the cast iron material surrounds it thus embedding it within the structure. After casting, the hollow inside surface of the annular insert defines the labyrinth groove. The annular insert can be formed with high precision and located within the molding cavity to eliminate or substantially reduce the requirement of post-casting machining of the labyrinth groove. The use of the annular insert is further believed to provide a tighter gap control with respect to the drum backing plate. Moreover, the existence of a steel annular insert within the open end of the drum provides enhanced mechanical properties of the composite drum.

The presence of the annular insert provides the additional benefit of providing for enhanced mechanical characteristics of the brake drum. The location of the annular insert around the brake drum rim is especially advantageous in that this is the region of the brake drum normally experiencing the greatest level of strain during use. In drum brake operation a phenomenon referred to as brake drum "belling" occurs in which the open end enlarges in diameter relative to the remainder of the drum. This deflection has been known to cause cracks in the brake drum which eventually can lead to the need for brake drum replacement. The presence of the annular insert, when made of a high modulus material such as steel aids in reducing drum deflection and in stopping cracks from prorogating along brake drum side portion toward mounting disk portion. It is further conceivable that the strengthening effect of the annular insert could lead to an optimized structure of less weight than present brake drums for a particular application.

As stated, the composite brake drum according to the invention is used for motor vehicle applications and incorporates an embedded annular insert. The annular insert is positioned within a casting cavity to define the surfaces of a labyrinth groove at the open rim of the brake drum. The labyrinth groove defines a region for a backing plate flange to define a labyrinth seal to prevent entry of debris into the brake drum. By defining the labyrinth groove using an annular insert inserted within the mold, the post-casting machining requirements are significantly reduced. Moreover, the presence of a steel annular insert in the rim of the brake drum provides structural benefits. The annular insert further preferably incorporates locating means to assure accurate positioning within the casting mold cavity.

Subsequently, preferred embodiments of the present invention are described in conjunction with the accompanying drawings in which
- Fig. 3: is a cross-sectional view taken through a composite drum in accordance with this invention shown within the green sand mold after cast iron is poured into the mold cavity.

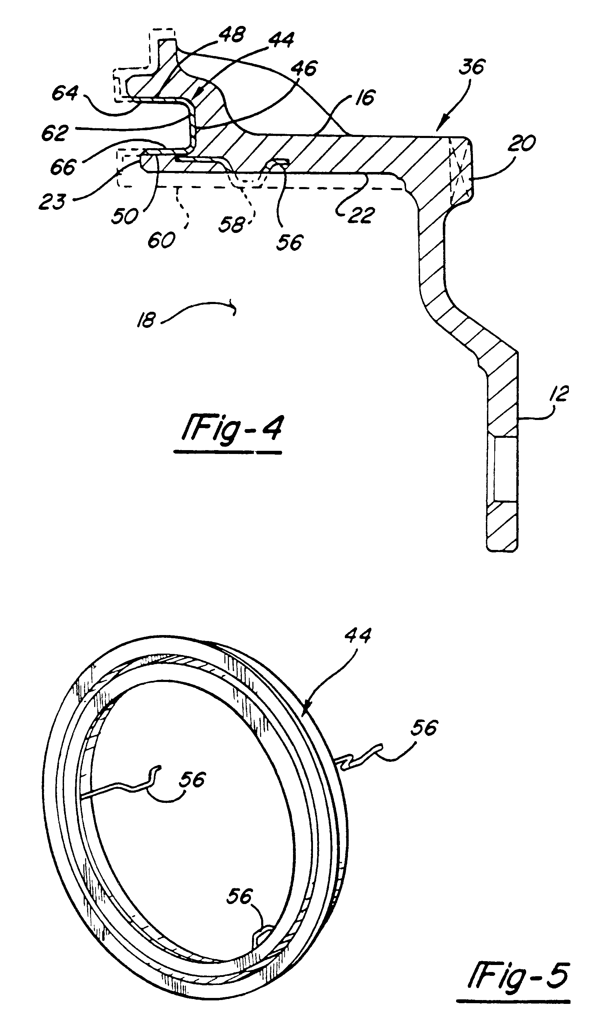

- Fig. 4: is a partial cross-sectional view showing the drum removed from the mold cavity and showing the configuration after final machining.
- Fig. 5: is a pictorial view of the annular insert.

The composite brake drum 36 as shown in Fig. 3 and 4 comprises a center disk portion 12 for mounting the brake drum 36 to a motor vehicle and a cylindrical side portion 16 joining the center disk portion 12 to define an inside cylindrical braking surface 22 and a closed end 20 and an open end 18 surrounded by a rim 23 defining a labyrinth groove 24 opening in a lateral direction relative to the axis of rotation of the brake drum 36. The center disk portion 12 and the cylindrical side portions 16 are formed from cast iron.

As shown in Fig. 3, brake drum 36 is formed within casting cavity 38 formed between male mold 40 and female mold 42. Before cast iron is poured into casting cavity 38, an annular insert 44 shown in Fig. 5 is placed within the cavity. The annular insert 44 has a "hat" or letter "U" section configuration having a radial wall 46 (with respect to axis 14) joining a pair of cylindrical walls 48 and 50, thus defining an open channel around drum rim 23. The annular insert 44 further has a pair of flanges 52 and 54 extending radially outward and inward from cylindrical walls 48 and 50, respectively. Flanges 52 and 54 aid in controlling the position of the annular insert 44 when it is placed within casting cavity 38 since they define a broad base surface which the annular insert rests on within the casting cavity.

Flanges 52 and 54 further act as walls or drums to control the flow of molded iron during casting. The annular insert 44 is preferably made from sheet steel stock formed by stamping or roll-forming.

Positioning of ring 44 is facilitated by the upstanding wall 55 of male mold 40 which fills the labyrinth groove area. To further assure accurate positioning of the annular insert 44 within casting cavity 38, two or more locating wires 56 can be provided. Locating wires 56 are attached to the annular insert 44 for example, by welding, and extend to contact one or both of the molds 40 or 42. As shown in Fig. 3 and 4, locating wires 56 have a segment 58 which extends along male mold surface 40. By spreading out the contact in this manner, the likelihood of scraping sand away from the mold is reduced. When used, three or more locating wires 56 would be provided and positioned circumferentially around the annular insert 44.

Fig. 4 shows composite brake drum 36 after final machining. The "as-cast" configuration of brake drum 36 is shown in Fig. 4 by the outline of phantom line 60 whereas the final machined configuration is shown by the full line configuration in Fig. 4. As shown, inside braking surface 22 is machined away which results in portions of locating wires 56 being removed. In addition, portions of the annular insert 44 are also machined away around drum open end rim 23. However, all three surfaces of labyrinth groove 24, including the bottom 62 and side 64 and 66 of the groove are defined by the annular insert 44, thus providing an accurately formed labyrinth groove 24 which requires a minimal degree of post-casting machining.

## Claims

1. A brake drum for a motor vehicle comprising a center disk portion (12) for mounting said drum to said motor vehicle, a cylindrical side portion (16) joining said center disk portion (12) to define an inside cylindrical braking surface (22) and a closed end (20) and an open end (18) surrounded by a rim (23), characterized by an annular insert (44) having a radial wall (46) and first (48) and second (50) cylindrical walls joining said radial wall (46), said annular insert (44) embedded within said cylindrical side portion (16) to form the bottom (62) and side surfaces (64, 66) of a labyrinth groove (24) within said rim (23).

2. A brake drum according to Claim 1 wherein said annular insert (44) is formed from sheet metal, particularly sheet steel.

3. A brake drum according to Claim 1 or 2 wherein said annular insert (44) further comprises locating means (56) for positioning said annular insert (44) relative to said cylindrical side portion (16) during forming of said brake drum (36).

4. A brake drum according to Claim 3 wherein said locating means (56) comprises at least two legs affixed to said annular insert (44).

5. A brake drum according to one of the Claims 1 to 4 wherein said walls (46, 48, 50) of said annular insert (44) have a generally constant thickness being formed from a deformable sheet stock material.

6. A brake drum according to one of the Claims 1 to 5 wherein said annular insert (44) further defines a flange (52, 54) extending from at least one of said cylindrical walls (48, 50).

7. A brake drum according to Claim 6 wherein said annular insert (44) defines a pair of flanges (52, 54) with one of said flanges (52, 54) extending from each of said cylindrical walls (48, 50).

8. A method for making a brake drum for a motor vehicle according to one of the Claims 1 to 7 comprising the steps of providing casting mold halves (40, 42) defining a mold cavity (38), providing said annular insert (44), placing said annular insert (44) into said mold cavity (38) in a position such that said annular insert walls (46, 48, 50) define the bottom (62) and side surfaces (64, 66) of said labyrinth groove (24) opening laterally relative to said drum (36), pouring molten iron into said mold cavity (38) thereby embedding said annular insert (44), and removing said brake drum (36) from said mold cavity (38).

9. A method according to Claim 8 further comprising the step of machining said brake drum (36) after said removing step thereby machining away portions of said annular insert (44).

## Patentansprüche

1. Bremstrommel für ein Kraftfahrzeug mit einem Mittelscheibenabschnitt (12) zum Anbringen der Trommmel an dem Kraftfahrzeug, mit einem zylindrischen Seitenabschnitt (16), der sich an den Mittelscheibenabschnitt (12) zur Bildung einer inneren zylindrischen Bremsoberfläche (22) anschließt, und mit einem geschlossenen Ende (20) und einem von einem Rand (23) umgebenen offenen Ende (18), gekennzeichnet durch einen ringförmigen Einsatz (44) mit einer radialen Wand (46) und einer ersten zylindrischen Wand (48) und einer zweiten zylindrischen Wand (50), die sich an die radiale Wand (46) anschließen, wobei der ringförmige Einsatz (44) in den zylindrischen Seitenabschnitt (16) eingebettet ist und die Unterseite (62) und die Seitenflächen (64, 66) einer Labyrinthnut (24) in dem Rand (23) bildet.

2. Bremstrommel nach Anspruch 1, bei welcher der ringförmige Einsatz (44) aus Blech, vorzugsweise aus Stahlblech ausgebildet ist.

3. Bremstrommel nach Anspruch 1 oder 2, bei welcher der ringförmige Einsatz (44) weiterhin eine Positioniereinrichtung (56) zum Positionieren des ringförmigen Einsatzes (44) bezüglich des zylindrischen Seitenabschnitts (16) während des Formens der Bremstrommel (36) aufweist.

4. Bremstrommel nach Anspruch 3, bei welcher die Positioniereinrichtung (56) mindestens zwei an dem ringförmigen Einsatz (44) festgelegte Schenkel aufweist.

5. Bremstrommel nach einem der Ansprüche 1 bis 4, bei welcher die Wände (46, 48, 50) des ringförmigen Einsatzes (44) eine insgesamt konstante Dicke haben und aus einem verformbaren Blechmaterial hergestellt sind.

6. Bremstrommel nach einem der Ansprüche 1 bis 5, bei welcher der ringförmige Einsatz (44) weiterhin einen Flansch (52, 54) bildet, der sich von mindestens einer der zylindrischen Wände (48, 50) aus erstreckt.

7. Bremstrommel nach Anspruch 6, bei welcher der ringförmige Einsatz (44) ein Paar von Flanschen (52, 54) bildet, wobei einer der Flansche (52, 54) sich von jeder der zylindrischen Wände (48, 50) aus erstreckt.

8. Verfahren zur Herstellung einer Bremstrommel für ein Kraftfahrzeug nach einem der Ansprüche 1 bis 7, welches die Schritte aufweist: Bereitstellen von einen Formhohlraum (38) bildenden Gießformhälften (40, 42), Bereitstellen des ringförmigen Einsatzes (44), Plazieren des ringförmigen Einsatzes (44) in den Formhohlraum (38) in eine derartige Position, daß die Wände des ringförmigen Einsatzes (46, 48, 50) die Unterseite (62) und Seitenflächen (64, 66) der Labyrinthnut (24) bilden, die seitlich bezüglich der Trommel (36) mündet, Gießen von geschmolzenem Eisen in den Formhohlraum (38), wodurch der ringförmige Einsatz (44) eingebettet wird, und Entfernen der Bremstrommel (36) aus dem Formhohlraum (38).

9. Verfahren nach Anspruch 8, welches weiterhin den Schritt aufweist, die Bremstrommel (36) nach dem Entfernungsschritt spanabhebend zu bearbeiten, wodurch Abschnitte des ringförmigen Einsatzes (44) spanabhebend entfernt werden.

## Revendications

1. Tambour de frein pour véhicule à moteur, comportant une partie centrale (12) en forme de disque servant à monter le tambour sur le véhicule à moteur, une partie latérale cylindrique (16) rejoignant la partie centrale (12) en forme de disque pour définir une surface cylindrique interne (22) de freinage, ainsi qu'une extrémité fermée (20) et une extrémité ouverte (18) entourée par un rebord (23), tambour caractérisé par une insertion annulaire (44) pourvue d'une paroi radiale (46) ainsi que d'une première (48) et seconde (50) parois cylindriques rejoignant la paroi radiale (46), l'insertion annulaire (44) étant encastrée à l'intérieur de la partie latérale cylindrique (16) pour former la surface de fond (62) et les surfaces latérales (64, 66) d'une gorge (24) à labyrinthe à l'intérieur du rebord (23).

2. Tambour de frein selon la revendication 1, dans lequel l'insertion annulaire (44) est formée à partir d'une tôle, plus particulièrement d'une tôle d'acier.

3. Tambour de frein selon la revendication 1 ou 2, dans lequel l'insertion annulaire (44) comporte, en outre, des moyens de positionnement (56) servant à positionner l'insertion annulaire (44) par rapport à la partie latérale cylindrique (16) pendant le moulage du tambour (36) de frein.

4. Tambour de frein selon la revendication 3, dans lequel les moyens de positionnement (56) sont formés par au moins deux branches attachées à l'insertion annulaire (44).

5. Tambour de frein selon l'une des revendications 1 à 4, dans lequel les parois (46, 48, 50) de l'insertion annulaire (44) ont une épaisseur généralement constante, étant façonnée à partir d'une feuille d'un matériau déformable.

6. Tambour de frein selon l'une des revendications 1 à 5, dans lequel l'insertion annulaire (44) définit, en outre, une bride (52, 54) s'étendant depuis l'une au moins des parois cylindriques (48, 50).

7. Tambour de frein selon la revendication 6, dans lequel l'insertion annulaire (44) définit deux brides (52, 54), l'une des brides (52, 54) s'étendant depuis chacune des parois cylindriques (48, 50).

8. Procédé pour fabriquer un tambour de frein pour véhicule à moteur selon l'une des revendications 1 à 7, comprenant les étapes consistant à fournir des demi-moules à fondre (40, 42) définissant une cavité de moulage (38), à amener l'insertion annulaire (44), à placer l'insertion annulaire (44) dans la cavité de moulage (38) dans une position telle que les parois (46, 48, 50) de l'insertion annulaire définissent la surface de fond (62) et les surfaces latérales (64, 66) de la gorge (24) à labyrinthe qui s'ouvre sur le côté par rapport au tambour (36), à verser le fer fondu dans la cavité de moulage (38) en noyant l'insertion annulaire (44) et à retirer le tambour (36) de frein de la cavité de moulage (38).

9. Procédé selon la revendication 8, comprenant l'étape consistant à usiner le tambour (36) de frein après l'avoir retiré, en supprimant par usinage des parties de l'insertion annulaire (44).
